# EUROPEAN PATENT SPECIFICATION

(11) **EP 2 937 728 B1**
(45) Date of publication and mention of the grant of the patent: **08.03.2023**
(21) Application number: 13864423.2
(22) Date of filing: 28.11.2013
(51) Int. Cl.: G02C 7/02, G02C 7/06

(54) **MANUFACTURING APPARATUS AND MANUFACTURING METHOD FOR SPECTACLE LENS**
HERSTELLUNGSGERÄT UND HERSTELLUNGSVERFAHREN FÜR BRILLENGLÄSER
APPAREIL ET PROCÉDÉ DE FABRICATION POUR VERRES DE LUNETTES

(30) Priority: 19.12.2012 JP 2012276545
(43) Date of publication of application: 28.10.2015
(73) Proprietor: HOYA Corporation, Tokyo 160-8347 (JP)
(72) Inventor: KOZU, Kazuma, Tokyo 160-8347 (JP)
(74) Representative: Betten & Resch
(86) International application number: PCT/JP2013/082090
(87) International publication number: WO 2014/097853

(56) References cited:
- WO-A1-2009/072528
- JP-A- 2006 350 381
- JP-A- 2011 203 705
- JP-A- 2012 173 596
- JP-A- 2012 215 639
- JP-A- 2013 171 134
- US-A1- 2010 271 590
- US-A1- 2010 271 590
- US-A1- 2011 194 070

## Description

### TECHNICAL FIELD

The present invention relates to a manufacturing apparatus and a manufacturing method for a spectacle lens comprising a first refractive portion having a first refractive power, a second refractive portion having a second refractive power stronger than the first refractive portion, and a progressive power portion in which the refractive power changes progressively from the first refractive power portion to the second refractive power portion.

### BACKGROUND ART

A spectacle lens having a refractive power portion in which the refractive power changes progressively is known. For example, a distance-near progressive power lens is designed such that the dioptric power changes progressively on a principal meridian so that a wearer can see an object clearly and seamlessly from a long distance to a short distance. Many of spectacle lenses of this type are designed depending on prescribed individual dioptric powers for left and right eyes and a wearing condition; however, for a case where a difference exists between prescribed distance dioptric powers for left and right eyes, such as anisometropia, conventional lens design was not suitable. The term anisometropia as used herein means a case where a difference exists between dioptric powers of left and right eyes regardless of the magnitude of the difference.

For example, when a wearer of anisometropia performs binocular vision for a target positioned on a side in a state where the wearer wears spectacle lenses of which left and right distance dioptric powers are different from each other, the wearer is forced to perform unnatural convergence or divergence not accompanied by tonic accommodation or relaxation of accommodation so as to cancel a shift between the left and right visual lines caused by a difference between prismatic effects of the left and right lenses. Furthermore, the convergence and the divergence of this type changes a position on a lens through which the visual line passes from a position assumed in design, which deteriorates the aberrations for the both eyes and thereby hampers suitable binocular vision.

In view of the above, regarding a pair of progressive power lenses having left and right dioptric powers different from each other, United States Patent Publication No. 8,162,478 (hereafter, referred to as patent document 1) suggests a pair of progressive power lenses configured to ensure suitable binocular vision. Specifically, patent document 1 describes technology where a lens component of a pair of progressive power lenses having left and right distance dioptric powers different from each other is divided into a component for a pair of progressive power lenses having the same distance dioptric power and the addition power and a component for a pair of single focal lenses having left and right dioptric powers different from each other, a ratio of moving amounts of visual lines on the lenses of the left and right eyes when an wearer moves the wearer's visual lines from a front far point to a far point other than the front while being oriented toward a predetermined azimuth angle in the state of performing binocular vision wearing the lenses having the component for the single focal lenses is calculated, and occurrence of aberrations other than the difference between the left and right distance dioptric powers is suppressed, in regard to the difference in the average dioptric power and the astigmatism between the left and right visual lines in binocular vision, by applying correction according to the ratio with respect to the average power distribution and die astigmatism of the lens component for a single eye or both eyes of the lenses having the component for the progressive power lens.

Document US20100271590A1 discloses a method to design lenses for anisometropic wearers based on scaling a given pair of progressive lenses based on calculated ratios in an alternative manner as the present invention.

### SUMMARY OF THE INVENTION

The invention is defined in independent claims 1 and 5.

As described above, patent document 1 suggests the lenses ensuring suitable binocular vision by decreasing the difference in aberrations with respect to the left and right visual lines in regard to a pair of progressive power lenses having the left and right distance dioptric powers different from each other. However, a demand for ensuring suitable binocular vision at a higher level constantly exists. In view of the above, as a result of intensive studies, the inventor of the present invention has found a manufacturing apparatus and a manufacturing method for spectacle lenses suitable for ensuring suitable binocular vision at a higher level.

A manufacturing apparatus is an apparatus for manufacturing a pair of spectacle lenses each of which has a first refractive portion having a first refractive power, a second refractive portion having a second refractive power stronger than the first refractive power, and a progressive power portion in which a refractive power changes progressively from the first refractive portion to the second refractive portion, and wherein first refractive powers of a left and a right of the pair of spectacle lenses are different from each other. The manufacturing apparatus comprises: a reference lens defining means that defines a reference lens common to the left and the right, based on predetermined prescription information, in accordance with a fact that physiologically degrees of accommodation of left and right eyes are equal to each other; an angle of view calculating means that calculates object side angles of view of light rays respectively passing through predetermined sample points on the reference lens; a prescribed side passing position calculating means that, by calculating light rays whose object side angles of view for a prescribed lens defined for each of the left and the right based on the predetermined prescription information are equal to the object side angles of view obtained by the angle of view calculating means, obtains light ray passing positions on the prescribed lens through which light rays having the same objet side angles of view as those of the light rays corresponding to the respective sample points on the reference lens pass; a ratio calculating means that, when a distance from an intersection between a visual line in a front view and the reference lens to the sample point on the reference lens is defined as a first distance and a distance from an intersection between the visual line in the front view and the prescribed lens to each of the light ray passing positions on the prescribed lens is defined as a second distance, calculates a ratio between the first distance and the second distance for each of the object side angles of view, wherein the ratio is calculated for each of the left and the right; and a curvature distribution correcting means that corrects, for each of the left and the right, a curvature distribution of the prescribed lens by correcting, based on the ratio, curvature at each of the light ray passing positions on the prescribed lens corresponding to the respective object side angles of view.

According to the manufacturing apparatus spectacle lenses in which the difference between addition effects actually acing on left and right eyes of a wearer on the principal meridian from the first refractive portion to the second refractive portion is reduced are manufactured. As a result, degrees of accommodation required for left and right eyes can be maintained at the same level, and in this case suitable binocular intermediate vision and near vision can be achieved. Furthermore, since, regarding the spectacle lenses thus manufactured, the difference between aberrations on the left and right visual lines is reduced, the quality of images formed on retinas of left and right eyes can be made equal to each other, and therefore a factor hampering the binocular vision function can be suppressed. As a result, suitable binocular vision can be guaranteed at every object distance from a long distance to a short distance, for example.

For example, when the first refractive power of the prescribed lens is on a minus side with respect to the first refractive power of the reference lens, the ratio between the first distance and the second distance corresponding to each of the object side angles of view takes a value smaller than 1 and is not uniform.

For example, when the first refractive power of the prescribed lens is on a plus side with respect to the first refractive power of the reference lens, the ratio between the first distance and the second distance corresponding to each of the object side angles of view takes a value larger than 1 and is not uniform.

The manufacturing apparatus may further comprise: a first addition calculating means that calculates an addition in the second refractive portion of the reference lens; a second addition calculating means that calculates, for each of the left and the right, an addition in the second refractive portion of the prescribed lens after correction of the curvature distribution by the curvature distribution correcting means; and an addition correcting means that further corrects, for each of the left and the right, the curvature distribution of the prescribed lens after the correction of the curvature distribution so as to make the addition calculated by the second addition calculating means coincide with the addition calculated by the first addition calculating means.

For example, the reference lens has a distance dioptric power and an addition common to the left and the right determined based on the predetermined prescription information. In this case, the distance dioptric power is an average dioptric power of distance dioptric powers of the left and the right.

A manufacturing method is a method for manufacturing a pair of spectacle lenses each of which has a first refractive portion having a first refractive power, a second refractive portion having a second refractive power stronger than the first refractive power, and a progressive power portion in which a refractive power changes progressively from the first refractive portion to the second refractive portion, and wherein first refractive powers of a left and a right of the pair of spectacle lenses are different from each other. The manufacturing method comprises: a reference lens defining step of defining a reference lens common to the left and the right, based on predetermined prescription information, in accordance with a fact that physiologically degrees of accommodation of left and right eyes are equal to each other; an angle of view calculating step of calculating object side angles of view of light rays respectively passing through predetermined sample points on the reference lens; a prescribed side passing position calculating step of, by calculating light rays whose object side angles of view for a prescribed lens defined for each of the left and the right based on the predetermined prescription information are equal to the object side angles of view obtained by the angle of view calculating step, obtaining light ray passing positions on the prescribed lens through which light rays having the same objet side angles of view as those of the light rays corresponding to the respective sample points on the reference lens pass; a ratio calculating step of, when a distance from an intersection between a visual line in a front view and the reference lens to the sample point on the reference lens is defined as a first distance and a distance from an intersection between the visual line in the front view and the prescribed lens to each of the light ray passing positions on the prescribed lens is defined as a second distance, calculating a ratio between the first distance and the second distance for each of the object side angles of view, wherein the ratio is calculated for each of the left and the right; and a curvature distribution correcting step of correcting, for each of the left and the right, a curvature distribution of the prescribed lens by correcting, based on the ratio, curvature at each of the light ray passing positions on the prescribed lens corresponding to the respective object side angles of view.

According to the manufacturing apparatus and the manufacturing method of the embodiment of the invention, since the difference between addition effects actually acing on left and right eyes of a wearer on the principal meridian from the first refractive portion to the second refractive portion is reduced and the difference between aberrations on the left and right visual lines is reduced, spectacle lenses capable of guaranteeing suitable binocular vision, for example, at every object distance from a long distance to a short distance are provided.

### BRIEF DESCRIPTION OF THE DRAWINGS

[Fig. 1] Fig. 1 is a block diagram illustrating a configuration of a spectacle lens manufacturing system according to an embodiment of the invention.
[Fig. 2] Fig. 2 is a flowchart illustrating a design process of spectacle lenses by a spectacle lens design computer according to the embodiment of the invention.
[Fig. 3] Fig. 3 is an explanatory illustration for principally explaining a step S2 in Fig. 2, and illustrates an example of a hypothetical optical model and a general lens layout for a reference lens.
[Fig. 4] Fig. 4 is an explanatory illustration for principally explaining step S3 in Fig. 2, and illustrates an object side angle of view of a light ray passing through each point on a reference lens model.
[Fig. 5] Fig. 5 is an explanatory illustration for principally explaining step S4 in Fig. 2, and illustrates a reference addition on a reference sphere.
[Fig. 6] Fig. 6 is an explanatory illustration for principally explaining steps S5 and S6 in Fig. 2, and illustrates an example of a hypothetical optical model for a prescribed lens and light ray passing positions on the prescribed lens.
[Fig. 7] Fig. 7 is an explanatory illustration for principally explaining step S7 in Fig. 2, and illustrates a correction ratio.
[Fig. 8] Fig. 8 is an explanatory illustration for principally explaining step S8 in Fig. 2, and illustrates transmission dioptric power distribution of each lens model.
[Fig. 9] Fig. 9 is an explanatory illustration for principally explaining step S10 in Fig. 2, and illustrates curves of addition before and after application of aspherical surface correction considering a wearing condition.
[Fig. 10] Fig. 10 is an explanatory illustration for principally explaining step S11 in Fig. 2, and illustrates fitting of substantive addition.
[Fig. 11] Fig. 11 is a diagram illustrating the difference between left and right substantive addition in each example.
[Fig. 12] Fig. 12 is an explanatory illustration for explaining a conventional problem where a burden is imposed on eyes of a wearer due to the difference between the left and right substantive addition.

### EMBODIMENTS FOR CARRYING OUT THE INVENTION

In the following, a spectacle lens manufacturing system according to an embodiment of the invention is explained.

### Spectacle Lens Manufacturing System 1

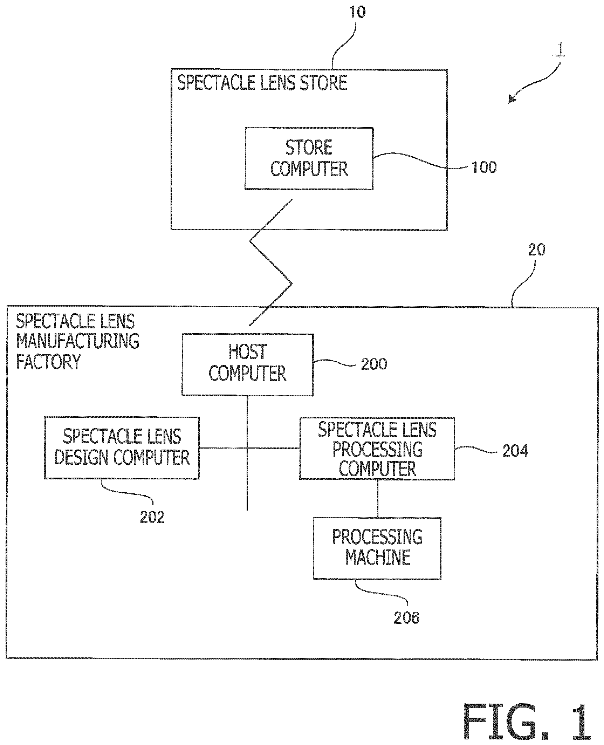

Fig. 1 is a block diagram illustrating a configuration of a spectacle lens manufacturing system 1 according to the embodiment. As shown in Fig. 1, the spectacle lens manufacturing system 1 includes an optical store 10 which orders spectacle lenses according to a prescription for a customer (a wearer), and a spectacle lens manufacturing factory 20 which manufactures spectacle lenses after receiving the order from the optical store 10. The order to the spectacle lens manufacturing factory 20 is issued through a predetermined network, such as the Internet, or data transmission by, for example, facsimile. Orderers may include ophthalmologists or general consumers.

### Optical Store 10

In the optical store 10, a store computer 100 is installed. The store computer 100 is, for example, a general PC (Personal Computer), and software for ordering spectacle lenses to the spectacle lens manufacturing factory 20 has been installed in the store computer 100. To the store computer 100, lens data and frame data are input through an operation to a mouse or a keyboard by an optical store staff. The lens data includes, for example, a prescription (e.g., a base curve, spherical power, cylindrical power, a cylindrical axis direction, prismatic power, prism base setting, an addition power and PD (Pupillary Distance) and the like), a wearing condition of spectacle lenses (a vertex distance, a pantoscopic angle, a face form angle), the type of spectacle lens (a single-vision spherical lens, a single-vision aspherical lens, a multifocal lens (a bifocal lens or a progressive power lens)), coating (dyeing processing, hard coating, anti-reflection coating, ultraviolet light cutting and the like), and layout data according to a customer's request. The frame data includes shape data of a frame selected by a customer. The frame data is managed, for example, by barcode tags, and can be obtained by reading a barcode tag adhered to a frame by a barcode reader. The store computer 100 transmits the ordering data (the lens data and the frame data) to the spectacle lens manufacturing factory 20 via, for example, the Internet.

### Spectacle Lens Manufacturing Factory 20

In the spectacle lens manufacturing factory 20, a LAN (Local Area Network) centering at a host computer 200 to which various terminal devices including a spectacle lens design computer 202 and a spectacle lens processing computer 204 are connected is constructed. Each of the spectacle lens design computer 202 and the spectacle lens processing computer 204 is a general PC. On the spectacle lens design computer 202 and the spectacle lens processing computer 204, a program for spectacle lens design and a program for spectacle lens processing are installed, respectively. To the host computer 200, the ordering data transmitted via the Internet is input from the store computer 100. The host computer 200 transmits the ordering data input thereto to the spectacle lens design computer 202.

In the spectacle lens manufacturing factory 20, design and processing for both surfaces, i.e., an outer surface and an inner surface, are performed for an unprocessed block piece so that a prescription for an wearer is satisfied. In order to enhance productivity, in the spectacle lens manufacturing factory 20, the whole production range of dioptric powers may be divided into a plurality of groups, and semi-finished lens blanks having outer surface (convex surface) curve shapes (a spherical shape or an aspherical shape) and lens diameters complying with respective production ranges may be prepared in advance in preparation for orders. In this case, in the spectacle lens manufacturing factory 20, spectacle lenses complying with the prescription for the wearer can be manufactured by only performing inner surface (concave surface) processing (and edging).

On the spectacle lens design computer 202, a program for designing spectacle lenses corresponding to an order has been installed, and generates lens design data based on the ordering data (lens data) and generates edge processing data based on the ordering data (frame data). Design of spectacle lenses by the spectacle lens design computer 202 is explained in detail later. The spectacle lens design computer 202 transfers generated lens design data and the edge processing data to the spectacle lens processing computer 204.

An operator sets a block piece on a processing machine 206, such as a curve generator, and inputs an instruction for start of processing to the spectacle lens processing computer 204. The spectacle lens processing computer 204 reads the lens design data and the edge processing data transferred from the spectacle lens design computer 202, and drives and controls the processing machine 206. The processing machine 206 performs grinding and polishing for inner and outer surfaces of the block piece in accordance with the lens design data, and generates the inner surface shape and the outer surface shape of the spectacle lens. Further, the processing machine 206 processes the outer peripheral surface of an uncut lens after generation of the inner surface shape and the outer surface shape so that the uncut lens has the peripheral shape corresponding to the edge shape.

In accordance with the ordering data, the spectacle lens after the edge processing is provided with various types of coatings, such as, dyeing processing, hard coating, anti-reflection coating and ultraviolet light cutting. The spectacle lenses are thus completed and are delivered to the optical store 10.

Specific Design Method of Spectacle Lens by Spectacle Lens Design Computer 202

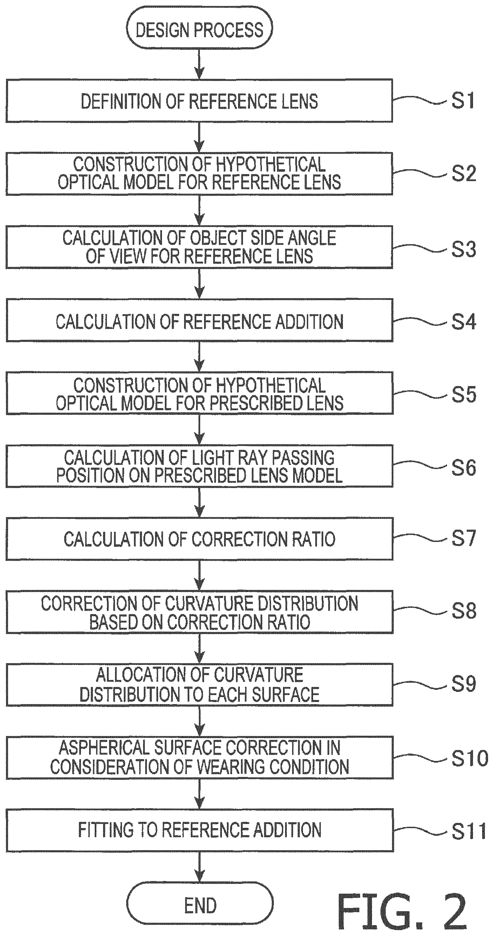

Fig. 2 is a flowchart illustrating a design process of spectacle lenses by the spectacle lens design computer 202. In the following explanation, as design targets to be prescribed for wearers of anisometropia, various types of distance-near spectacle lenses being a pair of spectacle lenses having left and right distance dioptric powers different from each other, such as, a one side progressive surface type having a progressive power component on an inner surface or an outer surface, a both side progressive surface type having a progressive power component on both of inner and outer surfaces, an integrated double surface type in which a vertical progressive power component is assigned to an outer surface and a horizontal progressive power component is assigned to an inner surface are assumed. However, the present design process may be applied to spectacle lenses of another type of item group (being a pair of spectacle lenses having left and right dioptric powers different from each other at predetermined reference points) having a progressive power portion in which the refractive power changes progressively, such as a intermediate-near progressive power lens or a near-near progressive power lens of a one side progressive surface type, a both side progressive surface type and an integrated double surface type.

Strictly speaking, a direction of an eye axis and a direction of a visual line are different from each other in ocular optics; however, effect by the difference therebetween can be neglected. Therefore, in this specification, it is assumed that directions of an eye axis and a visual line coincide with each other, and the difference between the eye axis and the visual line is caused only by the prismatic effect of a lens.

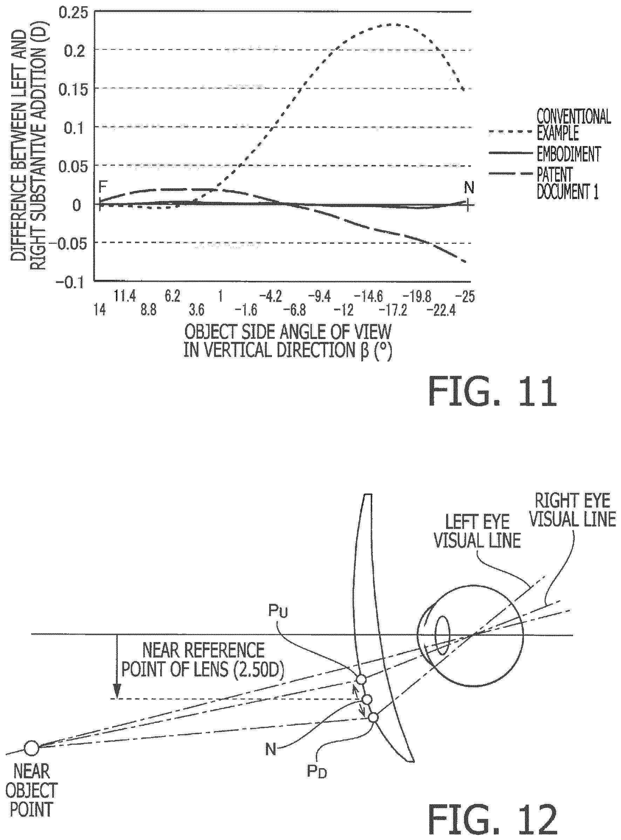

Hereafter, explanation is given regarding a problem which occurs on a pair of spectacle lenses having left and right distance dioptric powers different from each other with reference to Fig. 12. Fig. 12 illustrates a state where a wearer of anisometropia performs binocular vision for a near object point through spectacle lenses having prescribed dioptric power indicated below.
Prescribed dioptric power (Right): S+2.00 ADD2.50
Prescribed dioptric power (Left) : S+4.00 ADD2.50
Although in Fig. 12 left and right spectacle lenses are illustrated as one lens having a common shape for convenience of explanation, actually the left and right spectacle lenses have the different shape depending on their respective prescriptions.

As shown in Fig. 12, when a wearer of anisometropia performs binocular vision for a near object point, a shift occurs between left and right visual lines due to the difference in prismatic effects which correspond to the difference in prescribed dioptric powers. Specifically, the wearer performs binocular vision through points other than a near reference point N (a point having the addition of 2.50D at which the dioptric power for a near portion is set) laid out on the lens. In the example shown in Fig. 12, the right eye directs the visual line to the near object point through a point P_{U} (a point where the addition power is smaller than 2.50D) which is upper than the near reference point N, and the left eye directs the visual line to the near object point through a point P_{D} (a point where the addition power is larger than or equal to 2.50D) which is lower than the near reference point N. Since the left and right visual lines are shift with respect to each other as described above, the addition effects actually applied to the left and right eyes are different from each other. Therefore, theoretically different degrees of accommodation are required for the left and right eyes. However, physiologically the degrees of accommodation acting on the left and right eyes are equal to each other (Hering's law of equal innervation). Accordingly, the wearer is forced to view the near object point in a state where a burden is imposed on the eyes, i.e., a state where addition effects actually acting on the left and right eyes are different from each other. In this specification, the addition effect substantially acting on the eyes is also referred to as "substantive addition".

Through intensive studies carried out by the inventor of the present invention, the inventor has found that as the degree of difference between prescribed distance dioptric powers for the left and right eyes increases and also as the object distance becomes short, the difference between the substantive additions for the left and right eyes increases. In Fig. 12, as an example where the difference between the substantive additions for the left and right eyes becomes large, a state where a wearer views a near object point is illustrated. That is, the inventor has also found that the above described problem occurs not only in a case of a short distance but also in a case of a distance (e.g., a long distance or an intermediate distance) farther than the short distance. In this embodiment, by performing a design process explained below, spectacle lenses capable of ensuring suitable binocular vision at each object distance (from a long distance to a short distance) while resolving the above described problem are designed. In the following, the design process of spectacle lenses by the spectacle lens design computer 202 is specifically explained.

### S1 in Fig. 2 (Definition of Reference Lens)

The spectacle lens design computer 202 defines a reference lens based on a prescription for a wearer received from the store computer 100 via the host computer 200. The reference lens is a spectacle lens hypothetically defined, common to the left and right eyes, in accordance with the fact that physiologically the degrees of accommodation acting on the left and right eyes are equal to each other, and is configured such that the distance dioptric power is set to a common average value of the left and right prescribed distance dioptric powers. That is, the reference lens is a spectacle lens having a progressive power portion, and has the distance dioptric power and the addition power common to the left and right. In the following, the distance dioptric power of the reference lens is defined as a reference dioptric power. For example, in the case of
prescribed dioptric power (right): S+2.00 ADD2.50
prescribed dioptric power (left): S+4.00 ADD2.50,
the reference lens has:
   reference dioptric power (right): S+3.00 ADD2.50
   reference dioptric power (left): S+3.00 ADD2.50
It should be noted that, in this embodiment, explanation is given about the sequence where a right eye lens and a left eye lens are designed concurrently; however, in another embodiment the sequence may be performed such that one lens is designed first and thereafter the other lens is designed.

### S2 in Fig. 2 (Construction of Hypothetical Optical Model for Reference Lens)

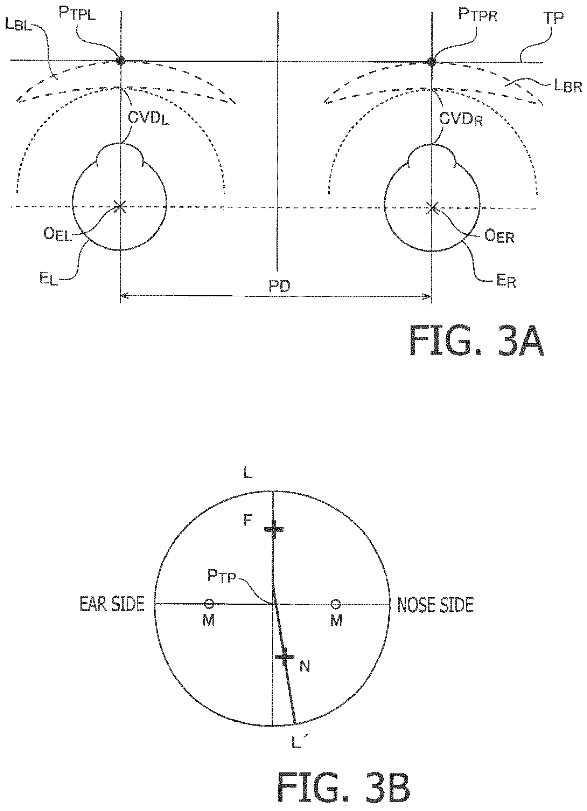

The spectacle lens design computer 202 constructs a predetermined hypothetical optical model having eye balls and spectacle lenses, supposing a state where a wearer wears spectacle lenses (Reference Lens: S+3.00 ADD 2.50). Fig. 3A illustrates an example of a hypothetical optical model constructed by the spectacle lens design computer 202. In the flowing explanation, reference numbers for the right eye are assigned a subscript of a letter R, and reference numbers for the left eye are assigned a subscript of a letter L. Furthermore, for explanation about the both of left and right eyes, these subscriptions are not assigned.

The eye axis lengths of eyeballs differ between hyperopia and myopia. For this reason, the spectacle lens design computer 202 stores in advance information on how the eye axis lengths differ depending on degrees of hyperopia and myopia. Of this information, the spectacle lens design computer 202 chooses a suitable eyeball model E according to the prescription (a spherical power, a cylindrical power) of a wearer included in the ordering data, and disposes the chosen eyeball model E in a hypothetical model space as shown in Fig. 3A. More specifically, an eyeball model E_{R} and an eyeball model E_{L} are disposed such that an eyeball rotation center O_{ER} and an eyeball rotation center O_{EL} are separated by a pupillary distance PD.

The spectacle lens design computer 202 disposes reference lens models L_{BR} and L_{BL} corresponding to the reference lenses at positions spaced by predetermined vertex distances CVD_{R} and CVD_{L} from the eyeball models E_{R} and E_{L}. The vertex distance CVD is a distance between the rear vertex of the reference lens model L_{B} and the cornea vertex of the eyeball model E, and is, for example, 12.5mm. It should be noted that the center thickness of the reference lens model L_{B} is determined based on, for example, the prescription and the refractive index of glass material. The reference lens model L_{B} may be disposed in the hypothetical model space while considering an inclination (a pantoscopic angle and a face form angle) of the spectacle lens. For convenience of explanation, a tangential plane to the reference lens model L_{B} at the outer surface vertex is defined as a tangential plane TP, an intersection between a visual line of the eyeball model E_{R} in a front view and the tangential plane TP is defined as a reference point P_{TPR}, and an intersection between a visual line of the eyeball model E_{L} in a front view and the tangential plane TP is defined as a reference point P_{TPL}. These reference points P_{TP} are lens design centers, and the lens design center is an intermediate point between a pair of hidden marks (which are described later).

Fig. 3B generally illustrates a layout of the spectacle lens defined by the present design process. As shown in Fig. 3B, the spectacle lens according to the embodiment is configured such that, on the principal meridian LL', a distance reference point F (a point at which the dioptric power for a distance portion is set) is disposed on the upper side of the lens design center, and a near reference point N is disposed on the lower side of the lens design center. The principal meridian LL' is shifted inward to the nose side considering the convergence of eyes, from an intermediate point of a progressive zone toward the near reference point N. Positions of the near reference point N and the distance reference point F are identified based on the pair of hidden marks M directly marked on a lens surface. As described later, the spectacle lens according to the embodiment is configured such that the lengths and the widths of the progressive power zones are different from each other between the left and right. Therefore, positions of the near reference points N and the distance reference points F on the lens surface are different from each other between the left and right.

### S3 in Fig. 2 (Calculation of Object Side Angle of View β regarding Reference Lens Model L_{B})

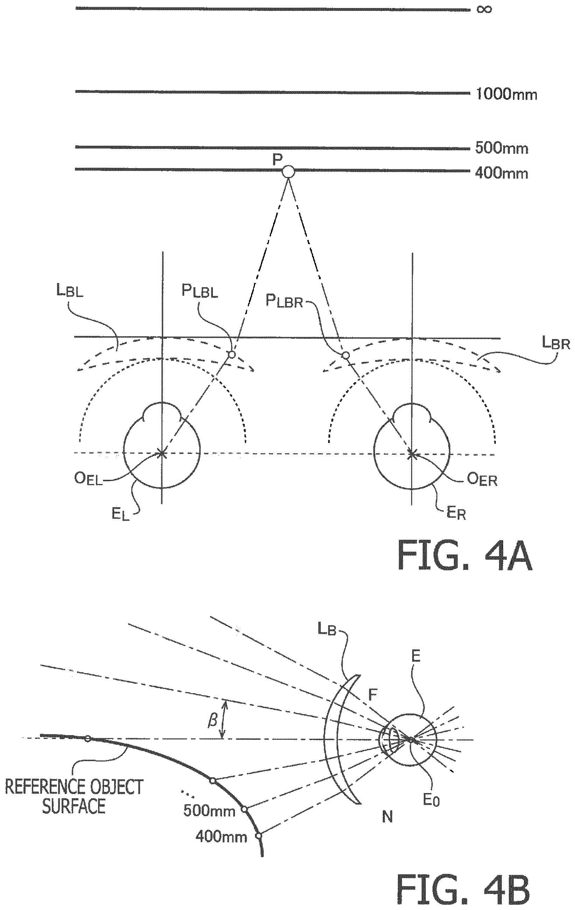

Each of Figs. 4A and 4B is an illustration for showing object side angles of view β (unit: degree) of light rays passing through respective points on the reference lens models L_{BR} and L_{BL}. It should be noted that, in Fig. 4 and the following drawings illustrating the hypothetical optical model, the hypothetical optical model is not represented as a top view (see Fig. 3A) in which the eyeball model E is viewed from the overhead side, but is represented as a side view (the principal meridian LL' becomes parallel with the paper face of the drawing for each of the eyeball models E_{R} and E_{L}, and the near reference point N is situated on the lower side and the distance reference point F is situated on the upper side) in which the eyeball model E is viewed from a side, for convenience of explanation. As shown in each of Figs. 4A and 4B, the object side angle of view β is defined with reference to a horizontal axis in a front view.

The spectacle lens design computer 202 calculates the object side angle of view β of a light ray passing through a sample point S on the reference lens model L_{B} (the outer surface of the lens in this case) by executing an optical calculation process using, for example, ray tracing. Since the eyeball rotation center O_{E} and the reference lens model L_{B} have already been defined for execution of the process, a position on the reference lens model L_{B} at which a light ray passes is determined and thereby the object side angle of view β of the light ray for the reference lens model L_{B} is uniquely determined. For this reason, in this embodiment, the object side angle of view β is calculated for each of predetermined sample points S on the reference lens model L_{B}. For example, the sample points S are disposed at constant intervals on the whole surface of the reference lens model L_{B}. However, the sample points S may be disposed in different weights for respective areas, such as, disposing densely in a clear vision area including the principal meridian LL' and disposing coarsely in a lateral area having a low degree of use frequency. In the following steps, it is assumed that lens design is performed on the premise that basically the curvature distribution (the curvature distribution corresponding to the transmission dioptric power distribution) exists only on the outer surface of the respective lens models.

Each of Figs. 4A and 4B shows the object side angle of view β of the light ray passing through each of the sample points S respectively corresponding to dioptric powers on the principal meridian LL'. On the reference lens model L_{B}, the near reference point N is a point located on the lower side, for example, by 14mm, from the reference point P_{TP}, and is a point through which a wearer views a target at a short work distance (a targeted near work distance, e.g., 400mm). Therefore, the object side angle of view β of the light ray passing through the near reference point N may be defined as an angle of view corresponding to the short work distance. Similarly, the object side angles of view β of light rays passing through the other sample points S may also be defined as angles of view respectively corresponding to the object distances assumed for such sample points S.

### S4 in Fig. 2 (Calculation of Reference Addition ADD_{S})

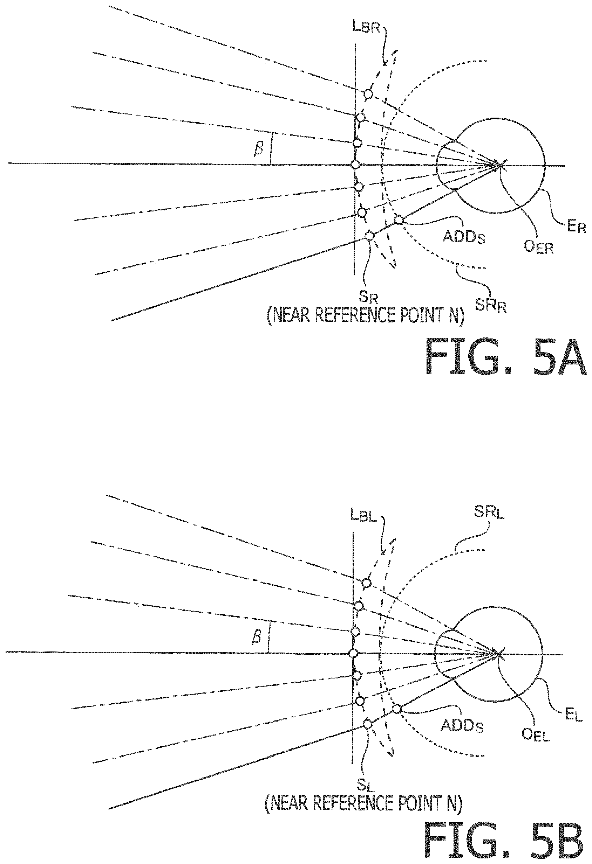

As shown in each of Figs. 5A and 5B, the spectacle lens design computer 202 defines a reference sphere SR as an evaluation surface for evaluating a targeted transmission dioptric power. The reference sphere SR is a sphere which has the center at the eyeball rotation center O_{E} of the eyeball model E and has a radius equal to a distance from the eyeball rotation center O_{E} to the rear vertex of the reference lens model L_{B}. The spectacle lens design computer 202 calculates the transmission dioptric power on the reference sphere SR for the light ray passing through the near reference point N of the reference lens model L_{B}. The transmission dioptric power calculated herein is a near dioptric power of the reference lens model L_{B}, and the reference addition ADD_{S} is defined as a value obtained by subtracting the near dioptric power from the distance dioptric power. Regarding a lens designed on the assumption that the difference between the near dioptric power and the distance dioptric power on the reference sphere SR is the addition, the reference addition ADD_{S} becomes a targeted dioptric power (ADD 2.50) common to die left and right.

### S5 in Fig. 2 (Construction of Hypothetical Optical Model for Prescribed Lens)

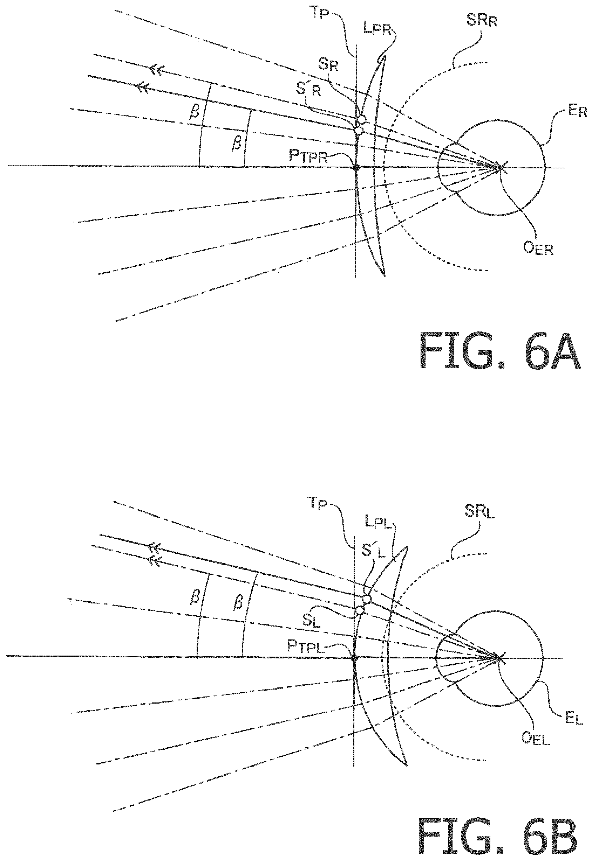

The spectacle lens design computer 202 changes the hypothetical optical model constructed in step S2 in Fig. 2 to another hypothetical optical model having eyeballs and spectacle lenses defined on the assumption that the wearer wears the spectacle lenses (prescribed lens (right): S+2.00 ADD2.50, prescribed lens (left): S+4.00 ADD2.50). Figs. 6A and 6B illustrate an example of the hypothetical optical model after change by the spectacle lens design computer 202. As shown in Figs. 6A and 6B, the spectacle lens design computer 202 disposes the prescribed lens models L_{PR} and L_{PL} respectively corresponding to the prescribed lenses (right and left) for the eyeball models E_{R} and E_{L}. The prescribed lens model L_{P} is defined by a know design method based on the prescription, and detailed explanation thereof will be omitted.

More specifically, the spectacle lens design computer 202 disposes the prescribed lens model L_{PR} such that the outer surface vertex is situated at the reference point P_{TPR} and the lens contacts the tangential plane TP at the outer surface vertex, and disposes the prescribed lens model L_{PL} such that the outer surface vertex is situated at the reference point P_{TPL} and the lens contacts the tangential plane TP at the outer surface vertex. The center thickness of the prescribed lens model Lp is also determined based on the prescription and the refractive index of the glass material. When the reference lens model L_{B} is disposed in the hypothetical optical space while considering an inclination (a pantoscopic angle and a face form angle), the prescribed lens model L_{P} is also disposed while considering the same condition.

### S6 in Fig. 2 (Calculation of Light Ray Passing Position on Prescribed Lens Model L_{P})

As shown in each of Figs. 6A and 6B, the spectacle lens design computer 202 calculates a light ray passing position on the prescribed lens model L_{P}. Specifically, by executing an optical calculation process using, for example, ray tracing, the spectacle lens design computer 202 finds out a light ray whose object side angle of view coincides with the angle of view β obtained in step S3 (calculation of object side angle of view β regarding Reference Lens Model L_{B}) in Fig. 2 in the hypothetical optical model in which the prescribed lens model L_{P} is disposed. As a result, positions (hereafter, referred to as "prescribed side passing positions S'") on the prescribed lens model L_{P} through which light rays having the same object side angles of view as those of the light rays corresponding to the sample points S on the reference lens model L_{B} pass are obtained. The objected distance assumed at each prescribed side passing position S' on die prescribed lens model Lp is equal to the object distance assumed at the corresponding sample point S.

### S7 in Fig. 2 (Calculation of Correction Ratio R)

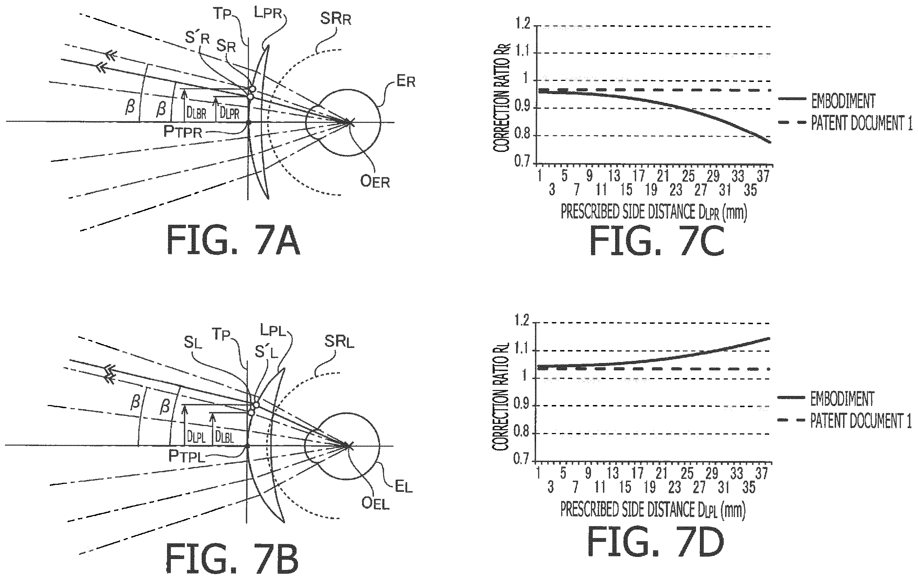

As shown in each of Figs. 7A and 7B, a distance between the reference point P_{TP} and the sample point S is defined as a reference side distance D_{LB}, and a distance between the reference point P_{TP} and the prescribed side passing position S' is defined as a prescribed side distance D_{LP}. In this case, the spectacle lens design computer 202 calculates a correction ratio R (=(the prescribed side distance D_{LP} corresponding to a certain object side angle of view β)/(the reference side distance D_{LB} corresponding to the same object side angle of view β)) corresponding to each object side angle of view β. Fig. 7C illustrates the relationship between the prescribed side distance D_{LPR} (unit: mm) on the principal meridian LL' between the reference point P_{TPR} and the near reference point N, and the correction ratio R_{R} (=the prescribed side distance D_{LPR}/the reference side distance D_{LBR}) for the right eye side. Fig. 7D illustrates the relationship between the prescribed side distance D_{LPL} (unit: mm) on the principal meridian LL' between the reference point P_{TPL} and the near reference point N, and the correction ratio R_{L} (=the prescribed side distance D_{LPL}/the reference side distance D_{LBL}) for the left eye side.

Since the prescribed lens model L_{PR} has the prescribed dioptric power (S+2.00) which is on the minus side with respect to the reference dioptric power (S+3.00), the prescribed side passing position S'_{R} becomes closer to the reference point P_{TPR} than the sample point S_{R} on the principal meridian LL' (see Fig. 7A). As shown by a solid line in Fig. 7C, the correction ratio R_{R} becomes smaller, in response to the difference between the prismatic effects of the prescribed lens model L_{PR} and the reference lens model L_{BR}, as the prescribed side distance D_{LPR} becomes long (as the prescribed side passing position S'_{R} moves away from the reference point P_{TPR} and thereby approaches the near reference point N).

On the other hand, since the prescribed lens model L_{PL} has the prescribed dioptric power (S+4.00) which is on the plus side with respect to the reference dioptric power (S+3.00), the sample point S_{L} becomes closer to the reference point P_{TPL} than the prescribed side passing position S'_{L} on the principal meridian LL' (see Fig. 7B). As shown in by a solid line in Fig. 7D, the correction ratio R_{L} becomes larger, in response to the difference between the prismatic effects of the prescribed lens model L_{PL} and the reference lens model L_{BL}, as the prescribed side distance D_{LPL} becomes long (as the prescribed side passing position S'_{L} moves away from the reference point P_{TPL} and thereby approaches the near reference point N).

For reference, an example defined by applying the correction ratio R according to the embodiment to the patent document 1 is illustrated by a dashed line in each of Figs. 7C and 7D. In the case of the patent document 1, as shown in Figs. 7C and 7D, both of the correction ratio R_{R} and the correction ratio R_{L} are constant regardless of the prescribed side passing positions S'_{R} and S'_{L}.

### S8 in Fig. 2 (Correction of Curvature Distribution based on Correction Ratio R)

The spectacle lens design computer 202 corrects the curvature distribution of the prescribed lens model L_{P} by executing the enlarging or reducing operation, based on the correction ratio R corresponding to each object side angle of view β, for the curvature distribution (hereafter referred to as "progressive distribution", which is a distribution obtained by extracting only a curvature distribution adding a progressive power component, of the whole curvature distribution of the lens) providing the progressive refractive power assumed for the reference lens model L_{B}. Specifically, as shown in the following expression, the reference progressive distribution (the progressive distribution of the reference lens model L_{B}) is corrected by enlarging or reducing the reference progressive distribution in accordance with the corresponding correction ratio R, and the corrected progressive distribution of the reference lens model L_{B} is applied as the progressive distribution of the prescribed lens model Lp.
(curvature K(x,y) of the progressive distribution of the prescribed lens)= (curvature K(x/Rx, y/Ry) of the progressive distribution of the reference lens)
where x and y denote coordinates of the prescribed side passing position S', and Rx and Ry denote the correction ratio R in the x direction and y direction.

Let us consider, for example, a case where change of the addition in the progressive zone is constant on the prescribed lens model L_{PR}, and the curvature at each prescribed side passing position S'_{R} disposed on the principal meridian LL' is to be corrected based on the correction ratio R_{R} shown in Fig. 7C. In this case, the curvature relating to the progressive refractive power effect at the position S'_{R} on the prescribed lens model L_{PR} (i.e., curvature which is defined by excluding a component by the distance dioptric power and which is a curvature component adding the addition effect) is operated so as to coincide with the curvature relating to the progressive refractive power effect at the sample point S_{R} on the reference lens model L_{BR}. In other words, the curvature corresponding to the addition effect at the sample point S_{R} is relocated to the prescribed side passing position S'_{R} corresponding to the correction ratio R_{R}. Since the correction ratio R_{R} differs between positions, change of addition after correction in the progressive zone becomes different in shape from change of addition in the progressive zone of the reference lens model L_{BR} depending on the correction ratio R_{R} (for example, the changing ratio of addition becomes larger as a point approaches the near reference point N from the reference point P_{TPR}). Regarding the prescribed lens model L_{PR} having the prescribed dioptric power on the minus side with respect to the reference dioptric power, the entire progressive distribution is reduced, in accordance with the correction ratio R_{R}, with respect to the progressive distribution of the reference lens model L_{BR}, and therefore the length of the progressive zone becomes short and the width of the progressive zone becomes narrow.

Let us further consider a case where change of addition in the progressive zone on the prescribed lens model L_{PL} is constant, and the curvature at each prescribed side passing position S'_{L} disposed on the principal meridian LL' is corrected based on the correction ratio R_{L} illustrated in Fig. 7D. In this case, the curvature relating to the progressive refractive power effect at the position S'_{L} on the prescribed lens model L_{PL} (i.e., curvature which is defined by excluding a component by the distance dioptric power and which is a curvature component adding the addition effect) is operated so as to coincide with the curvature relating to the progressive refractive power effect at the sample point S_{L} of the reference lens model L_{BL}. In other words, the curvature corresponding to the addition effect at the sample point S_{L} is relocated to the prescribed side passing position S'_{L} corresponding to the correction ratio R_{L}. Since the correction ratio R_{L} differs between positions, change of the addition after correction in the progressive zone becomes different in shape from change of addition in the progressive zone of the reference lens model L_{BL} depending on the correction ratio R_{L} (for example, the changing ratio of addition becomes smaller as a point approaches the near reference point N from the reference point P_{TPL}). Regarding the prescribed lens model L_{PL} having the prescribed dioptric power on the plus side with respect to the reference dioptric power, the entire progressive distribution is enlarged, in accordance with the correction ratio R_{L}, with respect to the progressive distribution of the reference lens model L_{BL}, and therefore the length of the progressive zone becomes long and the width of the progressive zone becomes wide.

Hereafter, explanation about the correction of the curvature distribution according to the embodiment is supplemented with reference to Fig. 12. Since the progressive zone becomes short when the curvature distribution (the progressive distribution) of the prescribed lens model L_{PR} is corrected based on the correction ratio R_{R} of Fig. 7C, a point at which the addition substantially becomes 2.50D approaches the right eye visual line passing point P_{U}. Since the progressive zone becomes long when the curvature distribution (the progressive distribution) of the prescribed lens model L_{PL} is corrected based on the correction ratio R_{L} of Fig. 7D, a point at which the addition substantially becomes 2.50D approaches the left eye visual line passing point P_{D}. That is, since in the example of Fig. 12 the difference between the addition effects acting on the left and right eyes of the wearer viewing the near object point is reduced, a burden on the eyes of the wearer caused by the difference between the substantive additions of the left and right can be reduced.

As described before, the problem shown in Fig. 12 also occurs at another object distance, such as an intermediate object distance, although in such a case the degree of the problem is not so serious with respect to the case of viewing at a short distance. Therefore, according to the embodiment, as can be seen from the correction ratio R shown in Figs. 7C and 7D, the difference between the substantive additions of the left and right caused when an object at an intermediate distance is viewed is suitably reduced through the suitable enlarging or reducing operation for the curvature distribution (the progressive distribution).

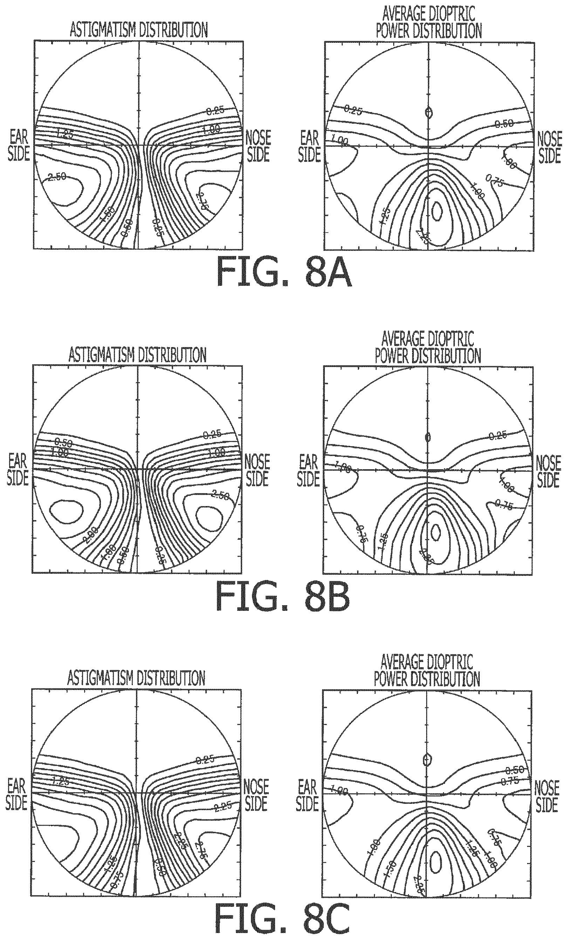

Fig. 8A illustrates an example of the transmission dioptric power distribution on the reference sphere SR of the reference lens model L_{B}. The transmission dioptric power distribution illustrated herein is the astigmatism distribution and the average dioptric power distribution, and is equivalent to the curvature distribution. Fig. 8B illustrates an example of the transmission dioptric power distribution on the reference sphere SR of the prescribed lens model L_{PR}, and Fig. 8C illustrates an example of the transmission dioptric power distribution on the reference sphere SR of the prescribed lens model L_{PL}.

The transmission dioptric power distribution (i.e., the curvature distribution) of the prescribed lens model L_{PR} illustrated as an example in Fig. 8B has been subjected to the reducing operation according to the correction ratio R_{R} at each prescribed side passing position S'_{R}. That is, contour lines of the astigmatism distribution and contour lines of the average dioptric power distribution are reduced in accordance with the correction ratio R_{R}, and basically as the prescribed side passing position S'_{R} moves away from the reference point P_{TPR}, the shape of the contour lines are further reduced.

The transmission dioptric power distribution (i.e., the curvature distribution) of the prescribed lens model L_{PL} illustrated as an example in Fig. 8C has been subjected to the enlarging operation according to the correction ratio R_{L} at each prescribed side passing position S'_{L}. That is, contour lines of the astigmatism distribution and contour lines of the average dioptric power distribution are enlarged in accordance with the correction ratio R_{L}, and basically as the prescribed side passing position S'_{L} moves away from the reference point P_{TPL}, the shape of the contour lines are further enlarged.

### S9 in Fig. 2 (Allocation of Curvature Distribution to Each Surface)

The spectacle lens design computer 202 allocates the curvature distribution of the prescribed lens model L_{P} corrected in step S8 in Fig. 2 to the outer surface and the inner surface of the prescribed lens model L_{P} in accordance with a structure (an inner aspherical surface type, an outer aspherical surface type, a both side progressive surface type, and an integrated double surface type) of the spectacle lens. As a result, the shape of the prescribed lens model L_{P} is tentatively determined.

### S10 in Fig. 2 (Aspherical Surface Correction in Consideration of Wearing Condition)

The spectacle lens design computer 202 calculates the aspherical surface correction amount according to the wearing condition (e.g., a vertex distance, a pantoscopic angle and a face form angle) for the shape of the prescribed lens model L_{P} tentatively determined in step S9 in Fig. 2 (allocation of curvature distribution), and adds the aspherical surface correction amount to the prescribed lens model Lp.

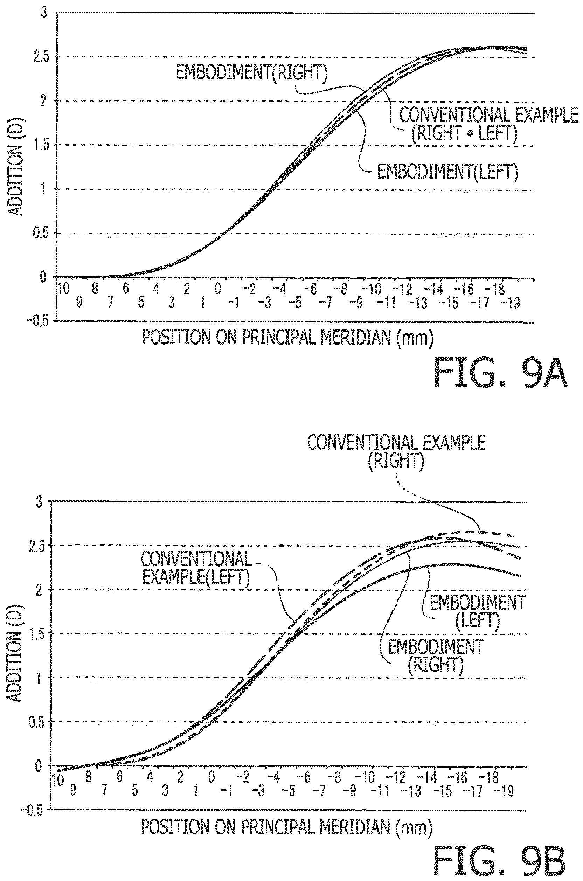

Each of Figs. 9A and 9B illustrates the relationship between the position (unit: mm) in the progressive zone (on the principal meridian LL') and the addition (unit: D) before application of the aspherical surface correction considering the wearing condition. In each of Figs. 9A and 9B, a solid line represents the addition of the spectacle lens according to the embodiment, and a dashed line represents the addition of an example of a conventional spectacle lens. The conventional example represents a lens in which a technical concept where the transmission dioptric power distribution is enlarged or reduced in accordance with the difference between the left and right distance dioptric powers or between the left and right substantive additions is not applied. Therefore, as shown in Fig. 9A, in the example of a conventional spectacle lens, curves of the left and right additions coincide with each other at least at a stage before application of the aspherical surface correction. On the other hand, regarding the spectacle lens according to the embodiment, as shown in Fig. 9A, curves of the left and right additions become different from each other as a result of application of the curvature distribution correction by step S8 in Fig. 2 (correction of the curvature distribution based on the correction ratio) at a stage before application of the aspherical surface correction.

In the meantime, after execution of the aspherical surface correction considering the wearing condition, curves of the left and right additions of the example of a conventional spectacle lens also become different from each other as shown in Fig. 9B. However, regarding a lens having the distance dioptric power of zero, such as a plano-convex lens, it is substantially not necessary to apply the aspherical surface correction considering the wearing condition. Furthermore, regarding a lens having a weak distance dioptric power, change of the shape by the aspherical surface correction considering the wearing condition is negligible. Therefore, regarding conventional spectacle lenses, curves of the left and right additions substantially stay at the same level even after execution of the aspherical surface correction, in regard to, among an item group, items whose total dioptric power of the left and right distance dioptric powers is weak. On the other hand, regarding the spectacle lens according to the embodiment, since the curvature distribution correction by step S8 in Fig. 2 (correction of curvature distribution based on the correction ratio) is applied, all the items (all the items suitable for the respective prescriptions) in the item group have the curves of the left and right additions different from each other regardless of the total dioptric power of the left and right distance dioptric powers.

### S11 in Fig. 2 (Fitting to Reference Addition ADD_{S})

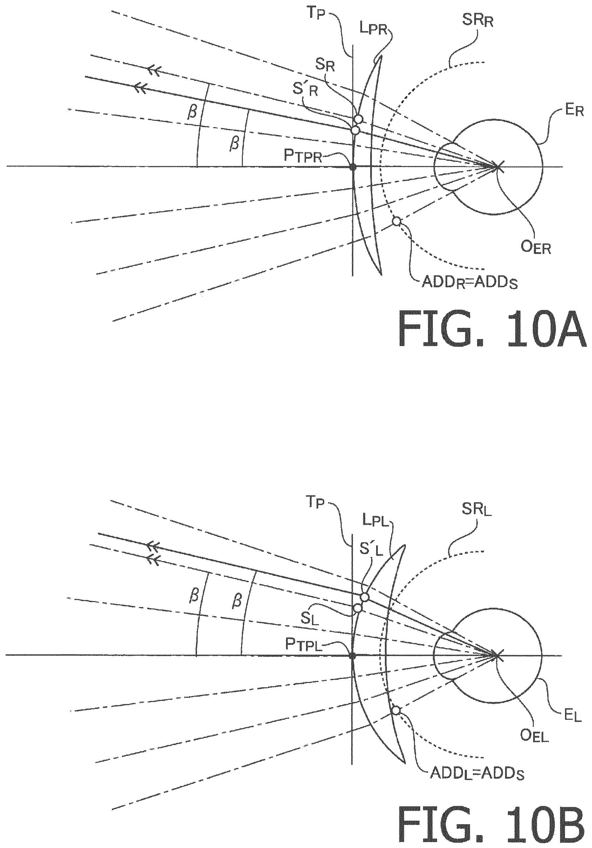

The spectacle lens design computer 202 obtains the calculated substantive addition ADD by calculating the transmission dioptric power (the near dioptric power) on the reference sphere SR for the right ray passing through the near reference point N of the prescribed lens model L_{F} to which the aspherical correction amount is added in step S10 in Fig. 2 (aspherical surface correction in consideration of wearing condition). Specifically, a substantive addition ADD_{R} is obtained by calculating the transmission dioptric power (the near dioptric power) on the reference sphere SR for the prescribed lens model L_{PR} and subtracting the distance dioptric power (S+2.00) from the calculated near dioptric power. Further, a substantive addition ADD_{L} is obtained by calculating the transmission dioptric power (the near dioptric power) on the reference sphere SR for the prescribed lens model L_{PL} and subtracting the distance dioptric power (S+4.00) from the calculated near dioptric power. The substantive additions ADD_{R} and ADD_{L} are corrected, to the extent that the substantive additions reach an approximated value of the targeted addition (ADD2.50), as a result of application of the curvature distribution correction by step S8 in Fig. 2 (correction of curvature distribution based on the correction ratio). Therefore, as described above, the difference between the addition effects substantially act on the left and right eyes of the wearer are reduced, and the burden on the eyes of the wearer due to the difference between the left and right substantive additions can be reduced. In the present process, as shown in Fig. 10, the substantive additions ADD_{R} and ADD_{L} are fitted to the reference addition ADD_{S} (i.e., substantive additions are made equal to the reference addition) by correcting the curvature distribution of the prescribed lens model Lp so as to further reduce the difference between the left and right substantive additions. As a result, the difference between the substantive additions defined when a near object point is viewed becomes almost zero.

Fig. 11 illustrates the relationship between the object side angle of view β (unit: degree) along the principal meridian LL' (in the vertical direction) and the difference (unit: D) of the left and right substantive additions. In Fig. 11, a solid line represents the difference between the left and right substantive additions according to the embodiment, a dashed line represents the difference between the left and right substantive additions in the patent document 1, and a dotted line represents the difference between the left and right substantive additions in the conventional example. As in the case of Fig. 9, the conventional example shown in Fig. 11 denotes a lens to which the technical concept where the transmission dioptric power distribution is enlarged or reduced in accordance with the difference between the left and right distance dioptric powers or the difference between the left and right substantive additions. As shown in Fig. 11, regarding the conventional example, the difference between the left and right substantive additions becomes large, for example, as the visual line is moved from the distance reference point F side to the near reference point N side. By contrast, regarding the patent document 1, the difference between the left and right substantive additions is suitably suppressed in the entire progressive zone. It is understood that, in this embodiment, the difference between the left and right substantive additions is almost zero over the entire progressive zone, and therefore is suppressed more suitably. That is, according to the spectacle lenses designed and manufactured according to the present design process, suitable binocular vision can be guaranteed at every object distance.

## Claims

1. A manufacturing apparatus for a pair of spectacle lenses each of which has a first refractive portion having a first refractive power, a second refractive portion having a second refractive power stronger than the first refractive power, and a progressive power portion in which a refractive power changes progressively from the first refractive portion to the second refractive portion, and wherein first refractive powers of a left and a right of the pair of spectacle lenses are different from each other,
the manufacturing apparatus comprising:
a reference lens defining means that defines a reference lens (LB) common to the left and the right, based on predetermined prescription information, in accordance with a fact that physiologically degrees of accommodation of left and right eyes are equal to each other, wherein the reference lens (LB) is a progressive lens that has a far vision power being intermediate between far vision powers of the left and right spectacle lenses;
an angle of view calculating means that calculates object side angles of view of light rays respectively passing through predetermined sample points (S) on the reference lens (LB);
a prescribed side passing position calculating means that, by calculating light rays whose object side angles of view for a prescribed lens (LP) defined for each of the left and the right based on the predetermined prescription information are equal to the object side angles of view obtained by the angle of view calculating means, obtains light ray passing positions (S') on the prescribed lens (LP) through which light rays having the same object side angles of view as those of the light rays corresponding to the respective sample points (S) on the reference lens (LB) pass;
a ratio calculating means that, when a distance between a reference point (PTP) and the sample point (S) on the reference lens (LB) in parallel to a tangential plane (TP) to the reference lens model (LB) at the outer surface vertex, is defined as a first distance (DLB), wherein the reference point (PTP) is identical with the outer vertex of the reference lens (LB), and a distance, in parallel to the tangential plane (TP), between the outer surface vertex (PTP) of the prescribed lens (LP) and the light ray passing position (S') calculated by the prescribed side passing position calculating means is defined as a second distance (DLP), wherein the prescribed lens (LP) is disposed such that the outer surface vertex is situated at the reference point (PTP), and wherein the prescribed lens (LP) contacts the tangential plane (TP) at the outer surface vertex, calculates a ratio between the first distance and the second distance for each of the object side angles of view, wherein the ratio is calculated for each of the left and the right;
a curvature distribution correcting means that corrects, for each of the left and the right, a curvature distribution of the prescribed lens (LP) by correcting, based on the ratio, curvature at each of the light ray passing positions on the prescribed lens (LP) corresponding to the respective object side angles of view, wherein the progressive distribution of the reference lens (LB) is corrected by enlarging or reducing the progressive distribution of the reference lens (LB) in accordance with the corresponding correction ratio, and wherein the corrected progressive distribution of the reference lens (LB) is applied as the progressive distribution of the prescribed lens;
a first addition calculating means that calculates an addition on a reference point in the second refractive portion of the reference lens (LB);
a second addition calculating means that calculates, for each of the left and the right, an addition on a point in the prescribed lens (LP) after correction of the curvature distribution by the curvature distribution correcting means, corresponding to the reference point; and
an addition correcting means that further corrects, for each of the left and the right, the whole curvature distribution of the prescribed lens (LP) after the correction of the curvature distribution so as to make the addition calculated by the second addition calculating means coincide with the addition calculated by the first addition calculating means.

2. The manufacturing apparatus according to claim 1,
wherein, when the first refractive power of the prescribed lens (LP) is on a minus side with respect to the first refractive power of the reference lens (LB), the ratio corresponding to each of the object side angles of view calculated by the ratio calculating means takes a value smaller than 1 and is not uniform.

3. The manufacturing apparatus according to claim 1 or 2,
wherein, when the first refractive power of the prescribed lens (LP) is on a plus side with respect to the first refractive power of the reference lens (LB), the ratio corresponding to each of the object side angles of view calculated by the ratio calculating means takes a value larger than 1 and is not uniform.

4. The manufacturing apparatus according to any of claims 1 to 3,
wherein:
the reference lens (LB) has a distance dioptric power and an addition common to the left and the right determined based on the predetermined prescription information; and
the distance dioptric power is an average dioptric power of distance dioptric powers of the left and the right.

5. A manufacturing method for manufacturing a pair of spectacle lenses each of
which has a first refractive portion having a first refractive power, a second refractive portion having a second refractive power stronger than the first refractive power, and a progressive power portion in which a refractive power changes progressively from the first refractive portion to the second refractive portion, and wherein first refractive powers of a left and a right of the pair of spectacle lenses are different from each other,
the manufacturing method comprising:
a reference lens defining step (S1) of defining a reference lens (LB) common to the left and the right, based on predetermined prescription information, in accordance with a fact that physiologically degrees of accommodation of left and right eyes are equal to each other, wherein the reference lens (LB) is a progressive lens that has a far vision power being
intermediate between far vision powers of the left and right spectacle lenses;
an angle of view calculating step (S3) of calculating object side angles of view of light rays respectively passing through predetermined sample points on the reference lens (LB);
a prescribed side passing position calculating step (S6) of, by calculating light rays whose object side angles of view for a prescribed lens (LP) defined for each of the left and the right based on the predetermined prescription information are equal to the object side angles of view obtained by the angle of view calculating step (S3), obtaining light ray passing positions on the prescribed lens (LP) through which light rays having the same object side angles of view as those of the light rays corresponding to the respective sample points on the reference lens (LB) pass;
a ratio calculating step (S7) of, when a distance between a reference point (PTP) and the sample point (S) on the reference lens (LB) in parallel to a tangential plane (TP) to the reference lens model (LB) is defined as a first distance, the wherein the reference point (PTP) is identical with the outer vertex of the reference lens (LB), and a distance , in parallel to the tangential plane (TP), between the outer surface vertex (PTP) of the prescribed lens (LP) and the light ray passing position (S') calculated by the prescribed side passing position calculating means is defined as a second distance, wherein the prescribed lens (LP) is disposed such that the outer surface vertex is situated at the reference point (PTP), and wherein the prescribed lens (LP) contacts the tangential plane (TP) at the outer surface vertex, calculating a ratio between the first distance and the second distance for each of the object side angles of view, wherein the ratio is calculated for each of the left and the right;
a first curvature distribution correcting step (S8) of correcting, for each of the left and the right, a curvature distribution of the prescribed lens (LP) by correcting, based on the ratio, curvature at each of the light ray passing positions on the prescribed lens (LP) corresponding to the respective object side angles of view, wherein the progressive distribution of the reference lens (LB) is corrected by enlarging or reducing the progressive distribution of the reference lens (LB) in accordance with the corresponding correction ratio, and wherein the corrected progressive distribution of the reference lens (LB) is applied as the progressive distribution of the prescribed lens (LP);
a first addition calculating step of calculating an addition on a reference point in the second refractive portion of the reference lens (LB);
a second addition calculating step of calculating, for each of the left and the right, an addition on a point in the prescribed lens (LP) after correction of the curvature distribution by the curvature distribution correcting means, corresponding to the reference point; and
a second curvature distribution correcting step of correcting, for each of the left and the right, the whole curvature distribution of the prescribed lens (LP) after the correction of the curvature distribution so as to make the addition calculated by the second addition calculating means coincide with the addition calculated by the first addition calculating means.

## Patentansprüche

1. Herstellungsgerät für ein Paar von Brillengläsern, von denen jedes einen ersten Brechungsbereich mit einer ersten Brechungswirkung, einen zweiten Brechungsbereich mit einer zweiten Brechungswirkung stärker als die erste Brechungswirkung, und einen Progressionswirkungsbereich hat, in dem eine Brechungswirkung sich progressiv von dem ersten Brechungsbereich zu dem zweiten Brechungsbereich verändert, und wobei erste Brechungswirkungen eines Linken und eines Rechten von dem Paar von Brillengläsern voneinander verschieden sind, wobei das Herstellungsgerät umfasst:
ein Referenzglasdefinitionsmittel, das ein gemeinsames Referenzglas (LB) für das Linke und das Rechte basierend auf vorbestimmten Verschreibungsinformationen in Übereinstimmung mit einer Tatsache definiert, dass physiologische Akkommodationsgrade von linken und rechte Augen zueinander gleich sind, wobei das Referenzglas (LB) ein Gleitsichtglas ist, das eine Fernsichtwirkung hat, die zwischen Fernsichtwirkungen des linken und des rechten Brillenglases ist;
ein Sichtwinkelberechnungsmittel, das objektseitige Sichtwinkel von Lichtstrahlen berechnet, die jeweils durch vorbestimmte Probenpunkte (S) auf dem Referenzglas (LB) passieren;
ein Verschreibungsseitenpassierpositionberechnungsmittel, das durch Berechnung von Lichtstrahlen, deren objektseitige Sichtwinkel für ein Verschreibungsglas (LP), definiert für jedes von dem Linken und dem Rechten basierend auf den vorbestimmten Verschreibungsinformationen, gleich sind zu den objektseitigen Sichtwinkeln, erhalten durch das Sichtwinkelberechnungsmittel, Lichtstrahlpassierpositionen (S') auf dem Verschreibungsglas (LP) erhält, durch welche Lichtstrahlen passieren, die die gleichen objektseitigen Sichtwinkel haben wie diejenigen der Lichtstrahlen entsprechend den jeweiligen Probenpunkten (S) auf dem Referenzglas (LB);
ein Verhältnisberechnungsmittel, das dann, wenn ein Abstand zwischen einem Referenzpunkt (PTP) und dem Probenpunkt (S) auf dem Referenzglas (LB) parallel zu einer Tangentialebene (TP) zu dem Referenzglasmodell (LB) an dem Außenoberflächenscheitel als ein erster Abstand (DLB) definiert wird, wobei der Referenzpunkt (PTP) identisch mit dem Außenscheitel des Referenzglases (LB) ist, und ein Abstand parallel zu der Tangentialebene (TP) zwischen dem Außenoberflächenscheitel (PTP) des Verschreibungsglases (LP) und der Lichtstrahlpassierposition (S`), berechnet durch das Verschreibungsseitenpassierpositionberechnungsmittel, als ein zweiter Abstand (DLP) definiert wird, wobei das Verschreibungsglas (LP) derart angeordnet ist, dass der Außenoberflächenscheitel sich an dem Referenzpunkt (PTP) befindet, und wobei das Verschreibungsglas (LP) die Tangentialebene (TP) an dem Außenoberflächenscheitel kontaktiert, ein Verhältnis berechnet zwischen dem ersten Abstand und dem zweiten Abstand für jeden von den objektseitigen Sichtwinkeln, wobei das Verhältnis für jedes von dem Linken und dem Rechten berechnet wird;
ein Krümmungsverteilungskorrekturmittel, das für jedes von dem Linken und dem Rechten eine Krümmungsverteilung des Verschreibungsglases (LP) korrigiert durch Korrigieren, basierend auf dem Verhältnis, einer Krümmung an jeder von den Lichtstrahlpassierpositionen auf dem Verschreibungsglas (LP) entsprechend den jeweiligen objektseitigen Sichtwinkeln, wobei die Progressionsverteilung des Referenzglases (LB) korrigiert wird durch Vergrößern oder Reduzieren der Progressionsverteilung des Referenzglases (LB) in Übereinstimmung mit dem entsprechenden Korrekturverhältnis, und wobei die korrigierte Progressionsverteilung des Referenzglases (LB) als die Progressionsverteilung des Verschreibungsglases angewandt wird;
ein erstes Additionsberechnungsmittel, das eine Addition an einem Referenzpunkt in dem zweiten Brechungsbereich des Referenzglases (LB) berechnet;
ein zweites Additionsberechnungsmittel, das für jedes von dem Linken und dem Rechten eine Addition an einem Punkt in dem Verschreibungsglas (LP) nach einer Korrektur der Krümmungsverteilung durch das Krümmungsverteilungskorrekturmittel entsprechend dem Referenzpunkt berechnet; und
ein Additionskorrekturmittel, das ferner für jedes von dem Linken und dem Rechten die gesamte Krümmungsverteilung des Verschreibungsglases (LP) nach der Korrektur der Krümmungsverteilung derart korrigiert, dass bewirkt wird, dass die durch das zweite Additionsberechnungsmittel berechnete Addition mit der Addition zusammenfällt, die durch das erste Additionsberechnungsmittel berechnet ist.

2. Herstellungsgerät nach Anspruch 1,
wobei dann, wenn die erste Brechungswirkung des Verschreibungsglases (LP) mit Bezug zu der ersten Brechungswirkung des Referenzglases (LB) auf einer Minusseite ist, das Verhältnis entsprechend jedem von den objektseitigen Sichtwinkeln, berechnet durch das Verhältnisberechnungsmittel, einen Wert kleiner als 1 annimmt und nicht gleichmäßig ist.

3. Herstellungsgerät nach Anspruch 1 oder 2,
wobei dann, wenn die erste Brechungswirkung des Verschreibungsglases (LP) mit Bezug zu der ersten Brechungswirkung des Referenzglases (LB) auf einer Plusseite ist, das Verhältnis entsprechend jedem von den objektseitigen Sichtwinkeln, berechnet durch das Verhältnisberechnungsmittel, einen Wert größer als 1 annimmt und nicht gleichmäßig ist.

4. Herstellungsgerät nach einem der Ansprüche 1 bis 3, wobei:
das Referenzglas (LB) eine dem Linken und dem Rechten gemeinsame dioptrische Fernwirkung und Addition hat, bestimmt basierend auf den vorbestimmten Verschreibungsinformationen; und
die dioptrische Fernwirkung eine mittlere dioptrische Wirkung von dioptrischen Fernwirkungen des Linken und des Rechten ist.

5. Herstellungsverfahren zur Herstellung eines Paars von Brillengläsern, von denen jedes einen ersten Brechungsbereich mit einer ersten Brechungswirkung, einen zweiten Brechungsbereich mit einer zweiten Brechungswirkung stärker als die erste Brechungswirkung, und einen Progressionswirkungsbereich hat, in dem eine Brechungswirkung sich progressiv von dem ersten Brechungsbereich zu dem zweiten Brechungsbereich verändert, und wobei erste Brechungswirkungen eines linken und eines rechten von dem Paar von Brillengläsern voneinander verschieden sind,
wobei das Herstellungsverfahren umfasst:
einen Referenzglasdefinitionsschritt (S1) des Definierens eines dem Linken und dem Rechten gemeinsamen Referenzglases (LB) basierend auf vorbestimmten Verschreibungsinformationen in Übereinstimmung mit einer Tatsache, dass physiologische Akkommodationsgrade von linken und rechten Augen zueinander gleich sind, wobei das Referenzglas (LB) ein Gleitsichtglas ist, das eine Fernsichtwirkung hat, die zwischen Fernsichtwirkungen des linken und des rechten Brillenglases ist;
einen Sichtwinkelberechnungsschritt (S3) des Berechnens von objektseitigen Sichtwinkeln von Lichtstrahlen, die jeweils durch vorbestimmte Probenpunkte auf dem Referenzglas (LB) passieren:
einen Verschreibungsseitenpassierpositionberechnungsschritt (S6) des Erhaltens, durch Berechnung von Lichtstrahlen, deren objektseitige Sichtwinkel für ein Verschreibungsglas (LP), definiert für jedes von dem Linken und dem Rechten, basierend auf den vorbestimmten Verschreibungsinformationen gleich sind zu den objektseitigen Sichtwinkeln, erhalten durch den Sichtwinkelberechnungsschritt (S3), von Lichtstrahlpassierpositionen auf dem Verschreibungsglas (LP), durch die Lichtstrahlen mit den gleichen objektseitigen Sichtwinkeln wie diejenigen der Lichtstrahlen entsprechend den jeweiligen Probenpunkten auf dem Referenzglas (LB) passieren;
einen Verhältnisberechnungsschritt (S7) des Berechnens, wenn ein Abstand zwischen einem Referenzpunkt (PTP) und dem Probenpunkt (S) auf dem Referenzglas (LB) parallel zu einer Tangentialebene (TP) zu dem Referenzglasmodell (LB) als ein erster Abstand definiert wird, wobei der Referenzpunkt (PTP) identisch ist mit dem Außenscheitel des Referenzglases (LB), und ein Abstand parallel zu der Tangentialebene (TP) zwischen dem Außenoberflächenscheitel (PTP) des Verschreibungsglases (LP) und der Lichtstrahlpassierposition (S`), berechnet durch das Verschreibungsseitenpassierpositionberechnungsmittel, als ein zweiter Abstand definiert wird, wobei das Verschreibungsglas (LP) derart angeordnet ist, dass der Außenoberflächenscheitel sich an dem Referenzpunkt (PTP) befindet, und wobei das Verschreibungsglas (LP) die Tangentialebene (TP) an dem Außenoberflächenscheitel kontaktiert, eines Verhältnisses zwischen dem ersten Abstand und dem zweiten Abstand für jeden von den objektseitigen Sichtwinkeln, wobei das Verhältnis für jedes von dem Linken und dem Rechten berechnet wird;
einen Erste-Krümmungsverteilung-Korrekturschritt (S8) des Korrigierens, für jedes von dem Linken und Rechten, einer Krümmungsverteilung des Verschreibungsglases (LP) durch Korrigieren, basierend auf dem Verhältnis, einer Krümmung an jeder von den Lichtstrahlpassierpositionen auf dem Verschreibungsglas (LP) entsprechend den jeweiligen objektseitigen Sichtwinkeln, wobei die Progressionsverteilung des Referenzglases (LB) korrigiert wird durch Vergrößern oder Reduzieren der Progressionsverteilung des Referenzglases (LB) in Übereinstimmung mit dem entsprechenden Korrekturverhältnis, und wobei die korrigierte Progressionsverteilung des Referenzglases (LB) als die Progressionsverteilung des Verschreibungsglases (LP) angewandt wird;
einen Erste-Addition-Berechnungsschritt des Berechnens einer Addition an einem Referenzpunkt in dem zweiten Brechungsbereich des Referenzglases (LB);
einen Zweite-Addition-Berechnungsschritt des Berechnens, für jedes von dem Linken und dem Rechten, einer Addition an einem Punkt in dem Verschreibungsglas (LP) nach Korrektur der Krümmungsverteilung durch das Krümmungsverteilungskorrekturmittel entsprechend dem Referenzpunkt; und
einen Zweite-Krümmungsverteilung-Korrekturschritt des Korrigierens, für jedes von dem Linken und dem Rechten, der gesamten Krümmungsverteilung des Verschreibungsglases (LP) nach der Korrektur der Krümmungsverteilung derart, dass bewirkt wird, dass die durch das zweite Additionsberechnungsmittel berechnete Addition mit der Addition zusammenfällt, die durch das erste Additionsberechnungsmittel berechnet ist.

## Revendications

1. Appareil de fabrication d'une paire de verres de lunettes ayant chacun une première partie réfractive ayant une première puissance réfractive, une deuxième partie réfractive ayant une deuxième puissance réfractive supérieure à la première puissance réfractive, et une partie de puissance progressive dans laquelle une puissance réfractive change progressivement de la première partie réfractive à la deuxième partie réfractive, et dans lequel des premières puissances réfractives d'une gauche et d'une droite de la paire de verres de lunettes sont différentes l'une de l'autre, l'appareil de fabrication comprenant :
un moyen de définition de verre de référence qui définit un verre de référence (LB) commun à la gauche et à la droite, sur la base d'informations de prescription prédéterminées, d'après le fait que des degrés d'adaptation physiologique des yeux gauche et droit sont égaux l'un à l'autre, le verre de référence (LB) étant un verre progressif ayant une puissance de vision de loin qui est intermédiaire entre des puissances de vision de loin des verres de lunettes gauche et droit ;
un moyen de calcul d'angle de vision qui calcule des angles de vision côté objet de rayons lumineux passant respectivement à travers des points d'échantillon (S) prédéterminés sur le verre de référence (LB) ;
un moyen de calcul de position de passage côté prescrit qui, par le calcul de rayons lumineux dont des angles de vision côté objet pour un verre prescrit (LP) défini pour chacune de la gauche et de la droite sur la base des informations de prescription prédéterminées sont égaux aux angles de vision côté objet obtenus par le moyen de calcul d'angle de vision, obtient des positions de passage de rayons lumineux (S') sur le verre prescrit (LP) par lesquelles passent des rayons lumineux ayant les mêmes angles de vision côté objet que ceux des rayons lumineux correspondant aux points d'échantillon (S) respectifs sur le verre de référence (LB) ;
un moyen de calcul de rapport qui, lorsqu'une distance entre un point de référence (PTP) et le point d'échantillon (S) sur le verre de référence (LB) parallèlement à un plan tangentiel (TP) au modèle de verre de référence (LB) au niveau du sommet de surface extérieur, est définie en tant qu'une première distance (DLB), le point de référence (PTP) étant identique au sommet extérieur du verre de référence (LB), et une distance, parallèlement au plan tangentiel (TP), entre le sommet de surface extérieur (PTP) du verre prescrit (LP) et la position de passage de rayons lumineux (S') calculée par le moyen de calcul de position de passage côté prescrit, est définie en tant qu'une deuxième distance (DLP), le verre prescrit (LP) étant disposé de sorte que le sommet de surface extérieur soit situé au point de référence (PTP), et le verre prescrit (LP) étant en contact avec le plan tangentiel (TP) au sommet de surface extérieur, calcule un rapport entre la première distance et la deuxième distance pour chacun des angles de vision côté objet, le rapport étant calculé pour chacune de la gauche et la droite ;
un moyen de correction de répartition de courbure qui corrige, pour chacune de la gauche et de la droite, une répartition de courbure du verre prescrit (LP) par la correction, sur la base du rapport, d'une courbure à chacune des positions de passage de rayons lumineux sur le verre prescrit (LP) correspondant aux angles de vision côté objet respectifs, la répartition progressive du verre de référence (LB) étant corrigée par l'agrandissement ou la réduction de la répartition progressive du verre de référence (LB) en fonction du rapport de correction correspondant, et la répartition progressive corrigée du verre de référence (LB) étant appliquée en tant que la répartition progressive du verre prescrit ;
un premier moyen de calcul d'addition qui calcule une addition à un point de référence dans la deuxième partie réfractive du verre de référence (LB) ;
un deuxième moyen de calcul d'addition qui calcule, pour chacune de la gauche et de la droite, une addition à un point dans le verre prescrit (LP) après une correction de la répartition de courbure par le moyen de correction de répartition de courbure, correspondant au point de référence ; et
un moyen de correction d'addition qui corrige davantage, pour chacune de la gauche et de la droite, la répartition de courbure complète du verre prescrit (LP) après la correction de la répartition de courbure de manière à amener l'addition calculée par le deuxième de moyen de calcul d'addition à coïncider avec l'addition calculée par le premier moyen de calcul d'addition.

2. Appareil de fabrication selon la revendication 1,
dans lequel, lorsque la première puissance réfractive du verre prescrit (LP) est sur un côté négatif par rapport à la première puissance réfractive du verre de référence (LB), le rapport correspondant à chacun des angles de vision côté objet calculé par le moyen de calcul de rapport prend une valeur inférieure à 1 et n'est pas uniforme.

3. Appareil de fabrication selon la revendication 1 ou 2,
dans lequel, lorsque la première puissance réfractive du verre prescrit (LP) est sur un côté positif par rapport à la première puissance réfractive du verre de référence (LB), le rapport correspondant à chacun des angles de vision côté objet calculé par le moyen de calcul de rapport prend une valeur supérieure à 1 et n'est pas uniforme.

4. Appareil de fabrication selon l'une quelconque des revendications 1 à 3,
dans lequel :
le verre de référence (LB) a une puissance dioptrique de distance et une addition commune à la gauche et à la droite déterminées sur la base des informations de prescription prédéterminées ; et
la puissance dioptrique de distance est une puissance dioptrique moyenne de puissances dioptriques de distance de la gauche et de la droite.

5. Procédé de fabrication pour fabriquer une paire de verres de lunettes ayant chacun une première partie réfractive ayant une première puissance réfractive, une deuxième partie réfractive ayant une deuxième puissance réfractive supérieure à la première puissance réfractive, et une partie de puissance progressive dans laquelle une puissance réfractive change progressivement de la première partie réfractive à la deuxième partie réfractive, et dans lequel des premières puissances réfractives d'une gauche et d'une droite de la paire de verres de lunettes sont différentes l'une de l'autre,
le procédé de fabrication comprenant :
une étape de définition de verre de référence (S1) consistant à définir un verre de référence (LB) commun à la gauche et à la droite, sur la base d'informations de prescription prédéterminées, d'après le fait que des degrés d'adaptation physiologique des yeux gauche et droit sont égaux l'un à l'autre, le verre de référence (LB) étant un verre progressif ayant une puissance de vision de loin qui est intermédiaire entre des puissances de vision de loin des verres de lunettes gauche et droit ;
une étape de calcul d'angle de vision (S3) consistant à calculer des angles de vision côté objet de rayons lumineux passant respectivement à travers des points d'échantillon prédéterminés sur le verre de référence (LB) ;
une étape de calcul de position de passage côté prescrit (S6) consistant, par le calcul de rayons lumineux dont des angles de vision côté objet pour un verre prescrit (LP) défini pour chacune de la gauche et de la droite sur la base des informations de prescription prédéterminées sont égaux aux angles de vision côté objet obtenus par l'étape de calcul d'angle de vision (S3), à obtenir des positions de passage de rayons lumineux sur le verre prescrit (LP) par lesquelles passent des rayons lumineux ayant les mêmes angles de vision côté objet que ceux des rayons lumineux correspondant aux points d'échantillon respectifs sur le verre de référence (LB) ;
une étape de calcul de rapport (S7) consistant, lorsqu'une distance entre un point de référence (PTP) et le point d'échantillon (S) sur le verre de référence (LB) parallèlement à un plan tangentiel (TP) au modèle de verre de référence (LB), est définie en tant qu'une première distance, le point de référence (PTP) étant identique au sommet extérieur du verre de référence (LB), et une distance, parallèlement au plan tangentiel (TP), entre le sommet de surface extérieur (PTP) du verre prescrit (LP) et la position de passage de rayons lumineux (S') calculée par le moyen de calcul de position de passage côté prescrit, est définie en tant qu'une deuxième distance, le verre prescrit (LP) étant disposé de sorte que le sommet de surface extérieur soit situé au point de référence (PTP), et le verre prescrit (LP) étant en contact avec le plan tangentiel (TP) au sommet de surface extérieur, à calculer un rapport entre la première distance et la deuxième distance pour chacun des angles de vision côté objet, le rapport étant calculé pour chacune de la gauche et de la droite ;
une première étape de correction de répartition de courbure (S8) consistant à corriger, pour chacune de la gauche et de la droite, une répartition de courbure du verre prescrit (LP) par la correction, sur la base du rapport, d'une courbure à chacune des positions de passage de rayons lumineux sur le verre prescrit (LP) correspondant aux angles de vision côté objet respectifs, où la répartition progressive du verre de référence (LB) est corrigée par l'agrandissement ou la réduction de la répartition progressive du verre de référence (LB) en fonction du rapport de correction correspondant, et où la répartition progressive corrigée du verre de référence (LB) est appliquée en tant que la répartition progressive du verre prescrit (LP) ;
une première étape de calcul d'addition consistant à calculer une addition à un point de référence dans la deuxième partie réfractive du verre de référence (LB) ;
une deuxième étape de calcul d'addition consistant à calculer, pour chacune de la gauche et de la droite, une addition à un point dans le verre prescrit (LP) après une correction de la répartition de courbure par le moyen de correction de répartition de courbure, correspondant au point de référence ; et
une deuxième étape de correction de répartition de courbure consistant à corriger, pour chacune de la gauche et de la droite, la répartition de courbure complète du verre prescrit (LP) après la correction de la répartition de courbure de manière à amener l'addition calculée par le deuxième de moyen de calcul d'addition à coïncider avec l'addition calculée par le premier moyen de calcul d'addition.
